# EUROPÄISCHE PATENTSCHRIFT

(11) **EP 1 057 005 B1**
(45) Veröffentlichungstag und Bekanntmachung des Hinweises auf die Patenterteilung: **22.10.2003**
(21) Anmeldenummer: 99908910.5
(22) Anmeldetag: 16.02.1999
(51) Int. Cl.: G01N 21/03, G01N 21/15

(54) **FLÜSSIGKEITSMESSZELLE**
MEASURING CELL FOR LIQUIDS
CELLULE DE MESURE DE LIQUIDE

(30) Priorität: 27.02.1998 DE 19808164
(43) Veröffentlichungstag der Anmeldung: 06.12.2000
(73) Patentinhaber: BRAN + LUEBBE GmbH, 22844 Norderstedt (DE)
(72) Erfinder: PETERSEN, Karl, D-22844 Norderstedt (DE); MIDDELBERG, Ludger, D-24568 Kaltenkirchen (DE)
(74) Vertreter: Lang, Friedrich, Dipl.-Ing.
(86) Internationale Anmeldenummer: EP9900999
(87) Internationale Veröffentlichungsnummer: WO99044038

(56) Entgegenhaltungen:
- DE-A- 3 103 476
- US-A- 3 998 592
- US-A- 4 580 901
- US-A- 5 046 854

## Beschreibung

Die Erfindung betrifft eine Flüssigkeitsmeßzelle zur Messung optischer Eigenschaften von Flüssigkeiten, insbesondere für NIR-Messungen, mit einer Meßkammer, die an einer Seite von einem lichtdurchlässigen Fenster begrenzt ist, und mit einem auf der gegenüberliegenden Seite der Meßkammer angeordneten Reflektor, der das auf ihn treffenden Licht durch die Meßkammer und das Fenster hindurch nach draußen reflektiert.

Eine derartige Flüssigkeitsmeßzelle ist beispielsweise aus der DE 31 03 476 C2 bekannt. Die bekannte Flüssigkeitsmeßzelle ist für die kombinierte Messung von Reflexions- und Transmisionseigenschaften (Transflexion) von Flüssigkeiten im Bereich des nahen Infrarot NIR bestimmt. Zu diesem Zweck besitzt sie an ihrer Oberseite ein lichtdurchlässiges Meßfenster, durch das die Strahlung einer Strahlungsquelle in eine vom Meßfenster begrenzte Meßkammer fällt, wo sie von der Flüssigkeit zum Teil reflektiert, zum Teil gestreut und zum Teil absorbiert wird. Der durch die Flüssigkeit hindurchtretende Anteil der Strahlung wird von einem gegenüber dem Meßfenster angeordneten Reflektor, der eine rauhe Goldoberfläche besitzt, diffus reflektiert und tritt dann erneut durch die Flüssigkeit hindurch. Die gestreuten und reflektierten Anteile treten dann am Meßfenster teilweise wieder aus. Bei der Transmission werden bestimmte Spektralbereiche der Strahlung stärker absobiert oder gestreut als andere, so daß eine Spektralanalyse des am Meßfenster austretenden diffusen Lichts Rückschlüsse auf Art und Menge der Inhaltsstoffe der untersuchten Flüssigkeit erlaubt.

Eine ähnliche Meßzelle ist auch aus der US-A-5 046 854 bekannt.

Bei den bekannten Flüssigkeitsmeßzellen wird die Meßkammer auf der Oberseite durch das Meßfenster und auf der Unterseite durch den Reflektor begrenzt. Dabei wird die Oberfläche des Reflektors von der Flüssigkeit benetzt. Diese Anordnung hat den Nachteil, daß sich an der rauhen Oberfläche des Reflektors leicht Bestandteile der Flüssigkeit anlagern und dessen optische Eigenschaften verändern. Damit ist aber die Reproduzierbarkeit der Messungen stark beeinträchtigt, was insbesondere bei Meßreihen sehr störend ist. Zwar kann hier eine häufige Reinigung der Reflektoroberfläche zunächst Abhilfe schaffen. Jedoch ist dies mit einem erheblichen zusätzlichen Aufwand verbunden und bringt auf die Dauer kein befriedigendes Ergebnis, denn die rauhe Oberfläche wird durch häufiges Reinigen in ihren optischen Eigenschaften verändert und schließlich zerstört. Dadurch wird wiederum die Reproduzierbarkeit der Meßergebnisse beeinträchtigt. Schließlich wird bei einer zerstörten Oberflächenbeschichtung in der Regel das darunterliegende Material des Reflektor durch Korrossion angegriffen, so daß der gesamte Reflektor endgültig unbrauchbar wird.

Es ist daher die Aufgabe der vorliegenden Erfindung, eine Flüssigkeitsmeßzelle der eingangs genannten Art anzugeben, die leicht zu reinigen ist und über lange Zeit gut reproduzierbare Messungen erlaubt.

Die Aufgabe wird erfindungsgemäß durch die Merkmale des Anspruchs 1 gelöst. Insbesondere ist zwischen dem Reflektor und der Meßkammer ein weiteres lichtdurchlässiges Fenster angeordnet, das die Meßkammer zu der anderen Seite hin begrenzt.

Bei der erfindungsgemäßen Anordnung kommt die Flüssigkeit statt mit der Reflektoroberfläche nur noch mit dem weiteren Fenster in Berührung. Das Fenster kann aus einem glatten, leicht zu reinigenden Material, vorzugsweise aus Glas bestehen, während die rauhe Reflektoroberfläche nicht von der Flüssigkeit benetzt und verunreinigt wird. Sie braucht daher nicht gereinigt zu werden und kann deshalb auch nicht verschleißen. Durch das weitere Fenster wird der Aufwand für die Reinigung und den ggf. notwendigen Austausch des Reflektors stark reduziert und die Reproduzierbarkeit der Meßergebnisse stark verbessert. Dies ist hier insofern überraschend, als daß zusätzliche optische Elemente im Strahlengang grundsätzlich zusätzliche Fehlerquellen darstellen, die die Meßergebnisse auch verschlechtern können.

Die Reproduzierbarkeit der Meßergebnisse hängt entscheidend von der Konstanz der Schichtdicke der Flüssigkeit, also von der Dicke der Meßkammer im Meßbereich ab. Diesbezüglich hat die aus der DE 31 03 476 C2 bekannte Anordnung den Nachteil, daß die zwischen Meßfenster und Reflektor angeordnete O-Ring-Dichtung elastisch ist, so daß nach dem Öffnen und Schließen der Meßzelle die Schichtdicke nicht sicher reproduziert wird. Außerdem bilden sich an der Oberfläche des O-Rings besonders leicht Ablagerungen aus der Flüssigkeit, die bei der Reinigung aufwendig entfernt werden müssen.

Zur Verbesserung der Reproduzierbarkeit der Meßergebnisse und zur Erleichterung der Reinigung wird daher eine besonders einfache Ausgestaltungsform der Erfindung empfohlen, bei der die Meßkammer als Hohlraum zwischen einem lichtdurchlässigen Kammerunterteil und einem auf dem Kammerunterteil aufliegenden lichtdurchlässigen Kammeroberteil ausgebildet ist. Der nicht vorhandene O-Ring kann nicht verschmutzen und die aneinander anliegenden harten Materialien von Kammeroberteil und Kammerunterteil gewährleisten stets eine genau reproduzierbare Schichtdicke in der Meßkammer. Da die Meßkammer von nur zwei einfach ausgestalteten Bauteilen gebildet wird, besitzt sie praktisch keine Ecken, Kanten oder Nischen, in denen sich Verunreinigungen einnisten könnten. Sie ist daher besonders einfach zu reinigen.

Eine gründliche Reinigung wird durch die Maßnahme, daß das Kammeroberteil abnehmbar ausgestaltet ist, besonders vereinfacht, weil bei abgenommenem Kammeroberteil alle mit der Flüssigkeit in Berührung kommenden Innenflächen für eine mechanische Reinigung leicht zugänglich sind.

Um die Abnehmbarkeit des Kammeroberteils per Hand ohne besondere Werkzeuge zu ermöglichen wird empfohlen, daß das Kammeroberteil deckelförmig als Scheibe mit einem als Schraub- oder Bajonettverschluß geeigneten Rand ausgebildet ist.

Die vorliegende Erfindung sieht vor, daß das Kammeroberteil als planparallele Scheibe, vorzugsweise als Glasscheibe, ausgebildet ist, deren Unterseite an einer ebenen Oberfläche des Kammerunterteils anliegt und eine planparallele Ausnehmung aufweist, die zusammen mit der Oberfläche des Kammerunterteils die Meßkammer begenzt. Die Tiefe der planparallelen Ausnehmung bestimmt die Schichtdicke der zu untersuchenden Flüssigkeit und im wesentlichen auch das Volumen der Meßkammer.

Um einen einfachen und schnellen Wechsel der Schickdicke zu ermöglichen wird vorgeschlagen, daß mehrere auswechselbare Kammeroberteile mit verschieden tiefen planparallelen Ausnehmungen vorgesehen sind.

Für den Zu- und Abfluß der zu untersuchenden Flüssigkeiten vor, während und nach den Messungen benötigt man Flüssigkeitsleitungen, die an geeigneten Stellen in die Meßkammer hineinführen. Eine einfache Ausgestaltung der Flüssigkeitszu- und abfuhr sieht vor, daß das Kammerunterteil für den Zu- und Abfluß der zu untersuchenden Flüssigkeit mit zwei Kanälen versehen ist, die von der Unterseite des Kammerunterteils ausgehend in einen Flüssigkeitseinlaß und einen Flüssigkeitsauslaß der Meßkammer münden. An die Kanäle können dann die weiterführenden Flüssigkeitsleitungen leicht von außen angeschlossen werden.

Die Reproduzierbarkeit der Meßergebnisse kann noch verbessert werden, indem das Kammerunterteil eine im Randbereich der planparallelen Ausnehmung des Kammeroberteils angeordnete ringförmige Ausnehmung aufweist, in die die Kanäle an radial gegenüberliegenden Stellen einmünden. Diese Maßnahme gewährleistet, daß rings um den Meßbereich herum ein etwas dickerer Bypass für die Flüssigkeit gebildet wird, in dem die eventuell in der Flüssigkeit enthaltenen Luftblasen, die die Meßergebnisse verfälschen könnten, am Meßbereich vorbeigeführt werden.

Um den Reflektor möglichst nahe an der Meßkammer anzuordnen, ist vorgesehen, daß das Kammerunterteil eine von seiner Unterseite her eingebrachte, zentrale zylindrische Reflektorbohrung aufweist, in der der Reflektor angeordnet ist, wobei ein vorzugsweise planparalleler Fensterbereich des Kammerunterteils zwischen dem Reflektor und der Meßkammer das weitere lichtdurchlässige Fenster bildet. Dieses Fenster ist im Verhältnis zur sonstigen Dicke des Kammerunterteils aufgrund der eingebrachten Reflektorbohrung relativ dünn, so daß eine ungünstige optische Absorption des Fensters verringert und die Wärmeübertragung zwischen Reflektor und Meßkammer verbessert wird.

In einer einfachen Ausführungsform ist vorgesehen, daß der Reflektor aus einem Reflektorkörper mit einem im wesentlichen zylindrischen Oberteil besteht, auf dessen Stirnfläche eine Reflexionsschicht aufgebracht ist.

Um die Charakteristik der diffus reflektierten Strahlung möglichst getreu zu erhalten, wird vorgeschlagen, daß die Reflexionsschicht aus einer rauhen Goldbeschichtung besteht.

In einer bevorzugten Ausführungsform besteht der Reflektorkörper aus einem gut wärmeleitenden Material, vorzugsweise aus Kupfer, und ist beheizbar und/oder kühlbar. Dies ermöglicht die Konstanthaltung der Temperatur der zu untersuchenden Flüssigkeit und trägt damit zur Verbesserung der Reproduzierbarkeit der Meßergebnisse bei, die sehr temperaturabhängig sind. Außerdem kann die Temperatur mit sehr geringem Energieaufwand konstant gehalten werden, weil der Reflektorkörper ein relativ kleines Volumen/Masse hat und nahe an der Meßkammer plaziert ist. Dadurch fließt wenig Wärme ungenutzt in die Umgebung ab oder (bei Kühlbetrieb) aus der Umgebung ein. Da nur kleinere Massen erhitzt/gekühlt werden müssen, ist die Einstellzeit für eine neue Temperatur sehr gering.

In Weiterbildung der Erfindung ist als Heizung und/oder Kühlung ein Peltier-Element vorgesehen. Das Peltier-Element benötigt nur Strom und keinen aufwendigen Wasseranschluß, wobei durch einfache Umkehr der Stromrichtung von der Heizung auf die Kühlung übergegangen werden kann.

Die Maßnahme, daß der Reflektor mit seiner Stirnfläche am Fensterbereich des Kammerunterteils unter elastischer Vorspannung anliegt, gewährleistet einen guten termischen Kontakt zur Meßkammer und konstante Bedingungen beim optischen Übergang zwischen dem Fensterbereich des Kammerunterteils und dem Reflektor, insbesondere ein planparallele Anlage bei nicht zu hohem Anpreßdruck.

Um die Verfälschung der Meßergebnisse durch mechanische Spannungen und Verbiegungen der optisch aktiven Elemente zu verhindern, wird empfohlen, daß zum Ausgleich der Längenausdehnung bei verschiedenen Temperaturen ein mit der Heizung verbundenes wärmeleitendes Zwischenstück vorgesehen ist, das an seiner Oberseite eine vorzugsweise kreisringförmige Nut aufweist, in die ein vorzugsweise rohrförmiges Unterteil des Reflektorkörpers verschiebbar eingesteckt ist.

Der Wärmeübergang dieser Anordnung kann noch verbessert werden, indem die Nut mit einem gut wärmeleitenden, dauerpastösen Material, vorzugsweise mit Wärmeleitpaste versehen ist.

Die zum Andruck des Reflektors an das Kammerunterteil erforderliche Vorspannung kann auf einfache Weise erzeugt werden, indem auf dem Nutgrund eine Ausgleichsscheibe oder Tellerfeder zur Erzeugung einer elastischen Vorspannung zwischen dem Reflektorkörper und dem Zwischenstück angeordnet ist.

Zur Verbesserung der Temperaturkonstanz der Flüssigkeitsprobe dient die Maßnahme, daß das Kammerunterteil im Fensterbereich einen Temperatursensor aufweist, der vorzugsweise exzentrisch in der Nähe des Flüssigkeitseinlasses angeordnet ist. Dieser Temperatursensor kann in einem allgemein bekannten Regelkreis mit der Heizung/Kühlung zusammenwirken, um die Temperatur der Flüssigkeitsprobe unter verschiedenen Umgebungseinflüssen automatisch zu stabilisieren und um eine vorgegebene Temperatur aus einem bestimmten Bereich einzustellen.

Zur weitgehenden Ausschaltung von störenden Umgebungseinflüssen und zur Verringerung der Reaktionszeit beim Einstellen und Konstanthalten von Temperaturen wird empfohlen, daß das Kammerunterteil im Fensterbereich eine von der Reflektorbohrung ausgehende Ausnehmung aufweist, in der der Temperatursensor untergebracht ist, so daß er nahe an der die Meßkammer begrenzenden Oberfläche des Kammerunterteils zu liegen kommt. Durch die Nähe zur Flüssigkeitsprobe ermittelt der Temperatursensor ohne wesentliche Verzögerung weitgehend die wahre Probentemperatur.

Weitere Vorteile und Einzelheiten der Erfindung ergeben sich aus der nachfolgenden Beschreibung eines Ausführungsbeispiels anhand der Zeichnungen.

Die Figuren zeigen im einzelnen:

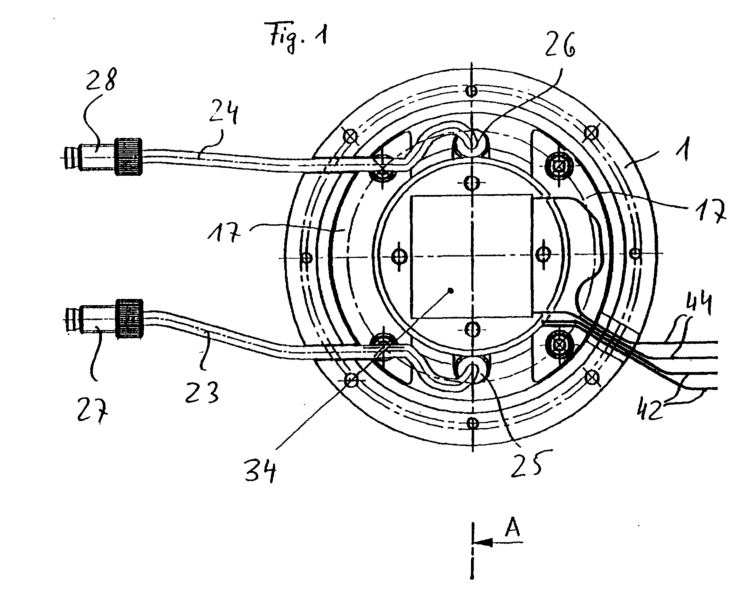

- Figur 1: eine Ansicht von der Unterseite einer erfindungsgemäßen Flüssigkeitsmeßzelle bei abgenommenem Gehäuseunterteil;

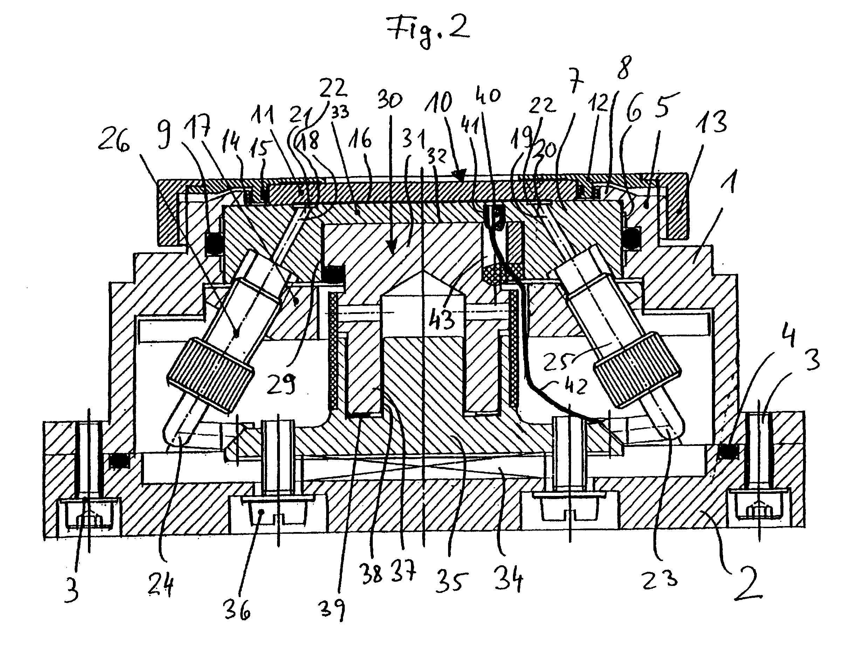

- Figur 2: einen Schnitt gemäß Linie A von Figur 1 derselben Flüssigkeitsmeßzelle.

Die in den Figuren dargestellte erfindungsgemäße Flüssigkeitsmeßzelle besitzt ein Gehäuse mit einem im wesentlichen kragenförmigen Gehäuseoberteil 1 und einem deckelartigen Gehäuseunterteil 2, die durch Gehäuseschrauben 3 miteinander verbunden und mittels einer O-Ring-Dichtung 4 abgedichtet sind.

Das Gehäuseoberteil 1 hat in seinem oberen Bereich 5 eine große kreisförmige Öffnung 6, in der ein aus Glas bestehendes Kammerunterteil 7 aufgenommen ist. Das Kammerunterteil 7 liegt nach oben an einem radial nach innen vorspringenden Kragen 8 des Gehäuseoberteils 1 an und ist gegenüber diesem mittels einer weiteren O-Ring-Dichtung 9 abgedichtet. Von unten her wird das Kammerunterteil 7 von einem Halter 17 abgestützt.

Ein deckelförmiges Kammeroberteil 10 besteht aus einer lichtdurchlässigen Glasscheibe 11, die in einen Zwischenring 12 eingesetzt ist und als Meßfenster dient, und einem in Richtung Gehäuseoberteil 1 umgebogenen Rand 13, der mit dem Zwischenring 12 fest verbunden ist. Das Kammeroberteil 10 ist auf das Gehäuseoberteil 1 aufgesetzt, wobei der Rand 13 den oberen Bereich 5 des Gehäuseoberteils 1 umfaßt und mittels eines Bajonettverschlusses mit diesem lösbar verbunden ist. Das Kammeroberteil 10 kann durch Lösen des Bajonettverschlusses leicht von der Flüssigkeitsmeßzelle abgenommen werden.

Für die Abdichtung der Flüssigkeitsmeßzelle sind weiterhin eine O-Ring-Dichtung 14 zwischen einem nach innen weisenden ringförmigen Vorsprung des Zwischenrings 12 und dem Kragen 8 des Gehäuseoberteils 1 und eine O-Ring-Dichtung 15 zwischen dem genannten ringförmigen Vorsprung und dem Umfang der Glasscheibe 11 vorgesehen. Der O-Ring 15 bildet gleichzeitig eine Klemmhalterung, die die Glasscheibe 11 bei abgenommenem Kammeroberteil 10 am Zwischenring 12 festhält.

Durch die beschriebene Dichtungskonzeption kommt zum einen die Flüssigkeitsprobe nicht mit den Dichtungen in Kontakt und zum anderen wird beim Zusammenbau nur eine konstante Kraft zum Verschließen der Zelle benötigt, denn die O-Ringe werden über Radialkräfte verformt, während die Zelle mit einer Axialkraft verschlossen wird.

Die Meßergebnisse hängen sehr stark von der durchstrahlten Schichtdicke der Flüssigkeit ab. Deshalb ist es entscheidend, daß diese über die gesamte Meßfläche und über die Meßdauer hinaus konstant bleibt, um auch bei späteren Messungen vergleichbare Bedingungen zu gewährleisten, insbesondere bei zusammenhängenden Meßreihen.

Bei verschlossener Flüssigkeitsmeßzelle liegt das Kammeroberteil 10 auf dem Kammerunterteil 7 auf und bildet mit diesem einen Hohlraum, die Meßkammer 16, in der sich während der Messung die zu untersuchende Flüssigkeit befindet. Die Dicke der Meßkammer 16 ist daher identisch mit der Schichtdicke der Flüssigkeit. Sie wird hier festgelegt durch die Tiefe einer planparallelen Ausnehmung an der Unterseite der Glasscheibe 11, die auf der im Meßbereich ebenen Oberfläche des Kammerunterteils 7 aufliegt.

Diese Anordnung hat den Vorteil, daß die für Messungen an verschiedenen Flüssigkeiten erforderlichen unterschiedlichen Schichtdicken/Kammerdicken einfach durch die Verwendung mehrerer Glasplatten 11 mit unterschiedlich tiefen Ausnehmungen realisiert werden können. Statt mehrere Flüssigkeitsmeßzellen zur Verfügung zu halten, braucht man nur die Glasplatte 11 auszutauschen. Der Austausch kann hier besonders einfach durchgeführt werden, indem man den Bajonettverschluß löst, das Kammeroberteil 10 abnimmt und die Glasplatte 11 aus ihrer Klemmhalterung (O-Ring 15) herausdrückt. Danach wird eine andere Glasplatte mit einer flacheren oder tieferen Ausnehmung in den Zwischenring 12 eingesetzt. Anschließend wird das Kammeroberteil 10 wieder aufgesetzt und gedreht, bis der Bajonettverschluß einrastet. Typischerweise werden in der Praxis für alle Anwendungzwecke fünf verschiedene Glasplatten im Schichtdickenbereich zwischen 50Om und 800Om ausreichen.

Das Kammerunterteil 7 besitzt zwei Kanäle 18, 19 für den Zu- und Abfluß der zu untersuchenden Flüssigkeit in die Meßkammer 16. Die Kanäle 18, 19 erstrecken sich von von der Unterseite des Kammerunterteils 7 bis zu einem Flüssigkeitseinlaß 20 und einem Flüssigkeitsauslaß 21 an der Oberseite des Kammerunterteils 7.

Das Kammerunterteil 7 ist mit einer ringförmigen Ausnehmung 22 versehen, die radial im Randbereich der planparallelen Ausnehmung des Kammeroberteils 10 angeordnet ist und die Meßfläche umschließt. In diese ringförmige Ausnehmung 22 münden der Flüssigkeitseinlaß 20 und der Flüssigkeitsauslaß 21 an radial gegenüberliegenden Stellen. Wenn die Meßkammer 16 von Flüssigkeit durchspült wird, fließen eventuell vorhandene Luftblasen vorzugsweise durch die ringförmige Ausnehmung 22 und werden daher um die Meßfläche herumgeführt.

Die Flüssigkeitsmeßzelle ist mit einer Zuflußleitung 23 und einer Abflußleitung 24 versehen, die mittels Schraubverbindungen 25, 26 an den Kanälen 18, 19 des Kammerunterteils 7 angeschlossen sind. Weitere Schraubverbindungen 27, 28 sind an den außerhalb der Flüssigkeitsmeßzelle befindlichen freien Enden der Leitungen 23, 24 angeordnet. Sie dienen zum Anschluß der Flüssigkeitsmeßzelle an ein Flüssigkeitsreservoir, aus dem beispielsweise mittels einer Pumpe Flüssigkeit gefördert wird, und einen Abfluß für die "verbrauchte" Flüssigkeit.

Das Kammerunterteil 7 ist mit einer von der Unterseite her eingebrachten zentralen Reflektorbohrung 29 versehen, die zur Aufnahme eines Reflektors 30 dient. Der Reflektor 30 besteht aus einem Reflektorkörper mit einem zylindrischen Oberteil 31, dessen Stirnfläche 32 mit einer rauhen Goldbeschichtung als Reflexionsschicht versehen ist. Die Stirnfläche 32 liegt unter Vorspannung an der oberen Endfläche der Reflektorbohrung 29 an, wo das gläserne Kammerunterteil 7 einen planparallelen lichtdurchlässigen Fensterbereich 33 besitzt, der die Reflexionsschicht von der Meßkammer 16 trennt und somit ein weiteres Fenster der Meßkammer 16 bildet.

Der Reflektor 30 dient auch zur Temperierung der Flüssigkeit in der Meßkammer 16 und besteht wegen der guten Wärmeübertragungseigenschaften aus Kupfer. Zum Heizen und Kühlen ist ein Peltier-Element 34 vorgesehen, das am Gehäuseunterteil 2 befestigt ist. Zwischen dem Peltier-Element 34 und dem Reflektor 30 ist ein wärmeleitendes Zwischenstück 35 angeordnet, das mittels Schrauben 36 am Gehäuseunterteil 2 befestigt ist. Zum Ausgleich der Längenausdehnung bei verschiedenen Temperaturen sind Zwischenstück 35 und Reflektor 30 zueinander axial verschiebbar ausgebildet. Für diesen Zweck besitz der Reflektor 30 ein rohrförmiges Unterteil 37, das in eine kreisringförmige Nut 38 an der Oberseite des Zwischenstücks 35 hineinragt. Zur Verbesserung der Wärmeübertragung ist die Nut 38 mit Wärmeleitpaste gefüllt. Auf dem Nutgrund ist eine Ausgleichsscheibe 39 angeordnet, die als Feder dient und den Reflektor 30 gegenüber dem Zwischenstück 35 elastisch vorspannt. Dadurch wird die elastische Vorspannung erzeugt, die den Reflektor 30 gegen den Fensterbereich 33 des Kammerunterteils 7 andrückt, um eine planparallele Anlage der Reflexionsschicht zu gewährleisten.

Um die Temperatur der zu untersuchenden Flüssigkeit im Inneren der Meßkammer 16 möglichst genau feststellen und schließlich auch regeln zu können, ist das Kammerunterteil 7 mit einem Temperatursensor 40 versehen, der im Fensterbereich 33 exzentrisch in der Nähe des Flüssigkeitseinlasses 20 angeordnet ist, damit die Regelung schneller auf sich ändernde Flüssigkeitstemperaturen reagieren kann. Der Temperatursensor 40 ist in einer Ausnehmung 41 untergebracht, die von der Reflektorbohrung 29 ausgehend sich nach oben bis nahe unter die Oberfläche des Kammerunterteils 7 erstreckt. Daher liegt der Temperatursensor 40 sehr nahe an der Meßkammer 16 und mißt mit hoher Genauigkeit die wahre Flüssigkeitstemperatur.

Die elektrischen Zuleitungen 42 für den Temperatursensor 40 sind durch eine Ausnehmung 43 des Reflektorkörpers 30 hindurch und schließlich aus dem Gehäuse 1, 2 herausgeführt, wo sie an eine nicht gezeigte elektronische Temperaturregelschaltung angeschlossen sind. Auch die elektrischen Zuleitungen 44 für das Peltier-Element 34 führen aus dem Gehäuse 1, 2 heraus zur Temperaturregelschaltung.

Die erfindungsgemäße Flüssigkeitsmeßzelle weist wegen ihres oben beschriebenen speziellen Dichtungskonzepts eine universelle Chemikalienbeständigkeit auf. Sie kann auf einfache Weise gereinigt werden, nachdem man den Bajonettverschluß gelöst und das Kammeroberteil 10 abgenommen hat, wobei die hinter dem Glas des Fensterbereichs 33 angeordnete Goldbeschichtung des Reflektors 30 stets geschützt bleibt.

Die Flüssigkeitsschichtdicke kann durch einfaches Auswechseln der Glasscheibe 11 bei abgenommenem Kammeroberteil 10 schnell geändert werden, wobei die jeweils gewünschte Schichtdicke aufgrund der präzisen Fertigung der Glasteile 7, 10 mit hoher Genauigkeit reproduzierbar ist.

Wegen der genauen Temperaturmessung in unmittelbarer Nähe der Flüssigkeit kann eine hohe Temperaturkonstanz gewährleistet werden. Aufgrund der guten Wärmeleitung zur Meßzelle 16 (im wesentlichen Kupfer) und der guten Wärmeisolierung der Meßzelle 16 gegenüber der Umgebung (im wesentlichen Glas) können einerseits neue Temperaturen sehr schnell eingestellt werden und andererseits besteht nur ein relativ geringer Heizungs- oder Kühlungsbedarf, der durch ein kleines Peltier-Element 16 gedeckt werden kann. Dies trägt wiederum zum kompakten Aufbau der Flüssigkeitsmeßzelle bei. Darüber hinaus kann das kleine Peltier-Element 16 die Wärme auf der anderen Seite über einen geeigneten Kuhlkörper an die Umgebungsluft abgeben. Man kann daher mit Vorteil auf eine ansonsten erforderliche Wasserkühlung mit dem damit verbundenen Aufwand verzichten. Trotzdem lassen sich mit der erfindungsgemäßen Flüssigkeitmeßzelle Meßtemperaturen von 10°C bis 60°C bei Umgebungstemperaturen von 5°C bis 40°C genauer als 0,3°C einstellen, wobei die Reproduzierbarkeit noch besser ist.

Die erfindungsgemäße Flüssigkeitsmeßzelle ist für die Untersuchung von flüssigen Proben im Viskositätsbereich von Sirup bis Alkohol geeignet, wobei die spezifischen Inhaltssoffe und andere Merkmale vermessen werden können. Die Probenzuführung kann manuell mit einer Spritze oder automatisch mit einer Pumpe erfolgen.

In der Meßkammer 16 werden die Proben innerhalb kürzester Zeit temperiert, so daß sehr schnell vergleichbare Meßbedingungen zur Verfügung stehen und die einzelnen Messungen innerhalb kürzester Zeit abgeschlossen sind. Eine typische Einstellzeit beträgt nur zwei Minuten. Insbesondere bei umfangreichen Meßreihen können so sehr viele Einzelmessungen innerhalb eines gegebenen Zeitintervalls durchgeführt werden.

Die eigentlichen spektroskopischen Messungen können beispielsweise, wie in der DE 31 03 476 C2 beschrieben, mittels einer optischen Integrationssphäre mit Strahlungsdetektoren durchgeführt werden, wobei eine geeignete Strahlungquelle bestimmte Lichtwellenlängen mittels eines Filterrades selektiert, wie es beispielsweise in der US 4,236,076 beschrieben ist.

### Bezugszeichenliste

- 1: Gehäuseoberteil
- 2: Gehäuseunterteil
- 3: Gehäuseschraube
- 4: O-Ring-Dichtung
- 5: oberer Bereich
- 6: Öffnung
- 7: Kammerunterteil
- 8: Kragen
- 9: O-Ring-Dichtung
- 10: Kammeroberteil
- 11: Glasscheibe
- 12: Zwischenring
- 13: Rand
- 14: O-Ring-Dichtung
- 15: O-Ring-Dichtung
- 16: Meßkammer
- 17: Halter
- 18: Kanal
- 19: Kanal
- 20: Flüssigkeitseinlaß
- 21: Flüssigkeitsauslaß
- 22: ringförmige Ausnehmung
- 23: Zuflußleitung
- 24: Abflußleitung
- 25: Schraubverbindung
- 26: Schraubverbindung
- 27: Schraubverbindung
- 28: Schraubverbindung
- 29: Reflektorbohrung
- 30: Reflektor
- 31: Oberteil
- 32: Stirnfläche
- 33: Fensterbereich
- 34: Peltier-Element
- 35: Zwischenstück
- 36: Schraube
- 37: Unterteil
- 38: Nut
- 39: Ausgleichsscheibe
- 40: Temperatursensor
- 41: Ausnehmung
- 42: Zuleitung
- 43: Ausnehmung
- 44: Zuleitung

## Patentansprüche

1. Flüssigkeitsmeßzelle zur Messung optischer Eigenschaften von Flüssigkeiten, mit einer Meßkammer (16), die an einer Seite von einem lichtdurchlässigen Fenster (11) als Kammeroberteil (10) begrenzt ist, und mit einem auf der gegenüberliegenden Seite der Meßkammer (16) angeordneten Reflektor (30), der das auf ihn treffende Licht durch die Meßkammer (16) und das Fenster (11) hindurch nach draußen reflektiert, wobei zwischen dem Reflektor (30) und der Meßkammer (16) ein weiteres lichtdurchlässiges Fenster (33) angeordnet ist, wobei die Meßkammer (16) als Hohlraum zwischen dem lichtdurchlässigen weiteren Fenster (33) (7) und dem lichtdurchlässigen Kammeroberteil (10) ausgebildet ist, **dadurch gekennzeichnet, daß** das weitere Fenster (33) als Kammerunterteil (7) angeordnet ist, das die Meßkammer (16) zu der anderen Seite hin begrenzt und, daß das Kammeroberteil (10) als planparallele Scheibe, vorzugsweise als Glasscheibe (11), ausgebildet ist, deren Unterseite an einer ebenen Oberfläche des Kammerunterteils (7) anliegt und eine planparallele Ausnehmung aufweist, die zusammen mit der Oberfläche des Kammerunterteils (7) die Meßkammer (16) begrenzt.

2. Flüssigkeitsmeßzelle nach Anspruch 1, **dadurch gekennzeichnet, daß** das Kammeroberteil (10) abnehmbar ausgestaltet ist.

3. Flüssigkeitsmeßzelle nach Anspruch 2, **dadurch gekennzeichnet, daß** das Kammeroberteil (10) deckelförmig als Scheibe (11) mit einem als Schraub- oder Bajonettverschluß geeigneten Rand (13) ausgebildet ist.

4. Flüssigkeitsmeßzelle nach einem der vorhergehenden Ansprüche, **dadurch gekennzeichnet, daß** mehrere auswechselbare Kammeroberteile (10) mit verschieden tiefen planparallelen Ausnehmungen vorgesehen sind.

5. Flüssigkeitsmeßzelle nach einem der vorhergehenden Ansprüche, **dadurch gekennzeichnet, daß** das Kammerunterteil (7) für den Zu- und Abfluß der zu untersuchenden Flüssigkeit mit zwei Kanälen (18, 19) vorsehen ist, die von der Unterseite des Kammerunterteils (7) ausgehend in einen Flüssigkeitseinlaß (20) und einen Flüssigkeitsauslaß (21) der Meßkammer (16) münden.

6. Flüssigkeitsmeßzelle nach Anspruch 5, **dadurch gekennzeichnet, daß** das Kammerunterteil (7) eine im Randbereich der planparallele Ausnehmung des Kammeroberteils (10) angeordnete ringförmige Ausnehmung (22) aufweist, in die die Kanäle (18, 19) an radial gegenüberliegenden Stellen einmünden.

7. Flüssigkeitsmeßzelle nach einem der vorhergehenden Ansprüche, **dadurch gekennzeichnet, daß** das Kammerunterteil (7) eine von seiner Unterseite her eingebrachte, zentrale zylindrische Reflektorbohrung (29) aufweist, in der der Reflektor (30) angeordnet ist, wobei ein vorzugsweise planparalleler Fensterbereich (33) des Kammerunterteils (7) zwischen dem Reflektor (30) und der Meßkammer (16) das weitere lichtdurchlässige Fenster bildet.

8. Flüssigkeitsmeßzelle nach Anspruch 7, **dadurch gekennzeichnet, daß** der Reflektor (30) aus einem Reflektorkörper mit einem im wesentlichen zylindrischen Oberteil (31) besteht, auf dessen Stirnfläche (32) eine Reflexionsschicht aufgebracht ist.

9. Flüssigkeitsmeßzelle nach Anspruch 8, **dadurch gekennzeichnet, daß** die Reflexionsschicht aus einer rauhen Goldbeschichtung besteht.

10. Flüssigkeitsmeßzelle nach Anspruch 8 oder 9, **dadurch gekennzeichnet, daß** der Reflektorkörper (30) aus einem gut wärmeleitenden Material, vorzugsweise aus Kupfer besteht und beheizbar und/oder kühlbar ist.

11. Flüssigkeitsmeßzelle nach Anspruch 10, **dadurch gekennzeichnet, daß** als Heizung und/oder Kühlung ein Peltier-Element (34) vorgesehen ist.

12. Flüssigkeitsmeßzelle nach Anspruch 10 oder 11, **dadurch gekennzeichnet, daß** der Reflektor (30) mit seiner Stirnfläche (32) am Fensterbereich (33) des Kammerunterteils (7) unter elastischer Vorspannung anliegt.

13. Flüssigkeitsmeßzelle nach einem der Ansprüche 10 bis 12, **dadurch gekennzeichnet, daß** zum Ausgleich der Längenausdehnung bei verschiedenen Temperaturen ein mit der Heizung (34) verbundenes wärmeleitendes Zwischenstück (35) vorgesehen ist, das an seiner Oberseite eine vorzugsweise kreisringförmige Nut (38) aufweist, in die ein vorzugsweise rohrförmiges Unterteil (37) des Reflektorkörpers (30) verschiebbar eingesteckt ist.

14. Flüssigkeitsmeßzelle nach Anspruch 13, **dadurch gekennzeichnet, daß** die Nut (38) mit einem gut wärmeleitenden, dauerpastösen Material, vorzugsweise mit Wärmeleitpaste versehen ist.

15. Flüssigkeitsmeßzelle nach Anspruch 13 oder 14, **dadurch gekennzeichnet, daß** auf dem Nutgrund eine Ausgleichsscheibe (39) oder Tellerfeder zur Erzeugung einer elastischen Vorspannung zwischen dem Reflektorkörper (30) und dem Zwischenstück (35) angeordnet ist.

16. Flüssigkeitsmeßzelle nach einem der vorhergehenden Ansprüche, **dadurch gekennzeichnet, daß** das Kammerunterteil (7) im Fensterbereich (33) einem Temperatursensor (40) aufweist, der vorzugsweise exzentrisch in der Nähe des Flüssigkeitseinlasses (20) angeordnet ist.

17. Flüssigkeitsmeßzelle nach Anspruch 16, **dadurch gekennzeichnet, daß** das Kammerunterteil (7) im Fensterbereich (33) eine von der Reflektorbohrung (29) ausgehende Ausnehmung (41) aufweist, in der der Temperatursensor (40) untergebracht ist, so daß er nahe an der die Meßkammer (16) begrenzenden Oberfläche des Kammerunterteils (7) zu liegen kommt.

## Claims

1. A liquid measuring cell for measuring optical properties of liquids, with a measuring chamber (16), which is adjoined on one side by a transparent window (11) as a top chamber part (10), and with a reflector (30) disposed on the opposite side of the measuring chamber (16), which reflects the light striking it toward the outside through the measuring chamber (16) and the window (11), an additional transparent window (33) being disposed between the reflector (30) and the measuring chamber (16), the measuring chamber (16) being embodied as a hollow space between the transparent additional window (33) and the transparent top chamber part (10),
**characterized in that**
the additional window (33) is arranged as bottom chamber part (7) which confines the measuring chamber on the other side and that the top chamber part (10) is embodied as a plane-parallel disk, preferably as a glass disk (11), whose underside rests against a flat surface of the bottom chamber part (7) and has a plane-parallel recess which, together with the surface of the bottom chamber part (7), defines the measuring chamber (16).

2. The liquid measuring cell according to claim 1,
**characterized in that**
the top chamber part (10) is embodied as removable.

3. The liquid measuring cell according to claim 2,
**characterized in that**
the top chamber part (10) is embodied in a cap-shaped fashion as a disk (11) with a suitable edge (13) embodied as a screw closure or as a bayonet lock.

4. The liquid measuring cell according to any one of the preceding claims,
**characterized in that**
a number of interchangeable top chamber parts (10) are provided, which have plane-parallel recesses with different depths.

5. The liquid measuring cell according to any one of the preceding claims,
**characterized in that**
the bottom chamber part (7) is provided with two conduits (18, 19) for the inflow and outflow of the liquid to be tested, which, starting from the underside of the bottom chamber part (7), lead to a liquid inlet (20) and a liquid outlet (21) of the measuring chamber (16).

6. The liquid measuring cell according to claim 5,
**characterized in that**
the bottom chamber part (7) has an annular recess (22) disposed in the edge region of the plane-parallel recess of the top chamber part (10), into which the conduits (18, 19) run from radially opposing points.

7. The liquid measuring cell according to any one of the preceding claims,
**characterized in that**
the bottom chamber part (7) has a central, cylindrical reflector bore (29) which is let into it from its underside, in which the reflector (30) is disposed, a preferably plane-parallel window region (33) of the bottom chamber part (7) between the reflector (30) and the measuring chamber (16) constituting the additional transparent window.

8. The liquid measuring cell according to claim 7,
**characterized in that**
the reflector (30) is comprised of a reflector body with an essentially cylindrical top part (31) whose front end (32) has a reflective layer affixed to it.

9. The liquid measuring cell according to claim 8,
**characterized in that**
the reflective layer is comprised of a rough gold coating.

10. The liquid measuring cell according to claims 8 or 9,
**characterized in that**
the reflector body (30) is comprised of a favorably heat conducting material, preferably copper, and can be heated and/or cooled.

11. The liquid measuring cell according to claim 10,
**characterized in that**
a Peltier element (34) is provided as the heating and/or cooling element.

12. The liquid measuring cell according to claims 10 or 11,
**characterized in that**
the reflector (30) rests with its front end (32) against the window region (33) of the bottom chamber part (7) under elastic initial stress.

13. The liquid measuring cell according to one of claims 10 to 12,
**characterized in that**
a heat conducting intermediary piece (35) connected to the heating element (34) is provided which has a preferably annular groove (38) on its top surface into which a preferably tubular bottom part (37) of the reflector body (30) is movably slid, to compensate for longitudinal expansion at different temperatures.

14. The liquid measuring cell according to claim 13,
**characterized in that**
the groove (38) is provided with a favorably heat conducting, permanently pasty material, preferably heat conducting paste.

15. The liquid measuring cell according to claims 13 or 14,
**characterized in that**
a compensating disk (39) or disk spring is disposed at the bottom of the groove in order to produce an elastic initial stress between the reflector body (30) and the intermediary piece (35).

16. The liquid measuring cell according to any one of the preceding claims,
**characterized in that**
the bottom chamber part (7) has a temperature sensor (40) in the window region (33) which is preferably disposed eccentrically in the vicinity of the liquid inlet (20).

17. The liquid measuring cell according to claim 16,
**characterized in that**
the bottom chamber part (7) has a recess (41) extending from the reflector bore (29) in the window region (33) in which the temperature sensor (40) is accommodated, so that it is situated close to surface of the bottom chamber part (7) adjoining the measuring chamber (16).

## Revendications

1. Cellule de mesure de liquides pour la mesure de propriétés optiques de liquides, avec une chambre de mesure (16), qui est limitée d'un côté par une fenêtre translucide (11) servant de partie supérieure (10) de chambre, et avec un réflecteur (30) placé du côté opposé de la chambre de mesure (16), qui réfléchit vers l'extérieur la lumière arrivant sur lui à travers la chambre de mesure (16) et la fenêtre (11), une autre fenêtre translucide (33) étant placée entre le réflecteur (30) et la chambre de mesure (16), la chambre de mesure (16) étant conformée en cavité entre l'autre fenêtre translucide (33) et la partie supérieure (10) de chambre translucide, ***caractérisée en ce que*** l'autre fenêtre (33) est disposée en tant que partie inférieure (7) de chambre, qui limite la chambre de mesure (16) en direction de l'autre côté, et ***en ce que*** la partie supérieure (10) de chambre est conformée en plaque à faces parallèles, de préférence en plaque de verre (11), dont la face inférieure s'appuie contre une surface plane de la partie inférieure (7) de chambre et présente un évidement à faces parallèles qui limite la chambre de mesure (16) avec la surface de la partie inférieure (7) de chambre.

2. Cellule de mesure de liquides selon la revendication 1, ***caractérisée en ce que*** la partie supérieure de chambre (10) est réalisée amovible.

3. Cellule de mesure de liquides selon la revendication 2, ***caractérisée en ce que*** la partie supérieure (10) de chambre est conformée en couvercle sous la forme d'une plaque (11) avec un bord (13) convenant pour une fermeture vissée ou à baïonnette.

4. Cellule de mesure de liquides selon l'une quelconque des revendications précédentes, ***caractérisée en ce que*** plusieurs parties supérieures (10) de chambre interchangeables sont munies d'évidements à faces parallèles de profondeurs différentes.

5. Cellule de mesure de liquides selon l'une quelconque des revendications précédentes, ***caractérisée en ce que*** la partie inférieure (7) de chambre est munie, pour l'arrivée et l'évacuation du liquide à étudier, de deux canaux (18, 19) qui, partant de la face inférieure de la partie inférieure (7) de chambre, débouchent dans une admission (20) de liquide et une évacuation (21) de liquide de la chambre de mesure (16).

6. Cellule de mesure de liquides selon la revendication 5, ***caractérisée en ce que*** la partie inférieurs (7) de chambre présente un évidement (22) annulaire placé dans la partie de bord de l'évidement à faces parallèles de la partie supérieure (10) de chambre, dans lequel les canaux (18, 19) débouchent en des points opposés radialement.

7. Cellule de mesure de liquides selon l'une quelconque des revendications précédentes, ***caractérisée en ce que*** la partie inférieure (7) de chambre présente un perçage (29) de réflecteur cylindrique central ménagé à partir de sa face inférieure, et dans lequel est placé le réflecteur (30), une partie (33) de fenêtre de préférence à faces parallèles de la partie inférieure (7) de chambre formant l'autre fenêtre translucide entre le réflecteur (30) et la chambre de mesure (16).

8. Cellule de mesure de liquides selon la revendication **7, *caractérisée en ce que*** le réflecteur (30) se compose d'un corps de réflecteur avec une partie supérieure (31) sensiblement cylindrique, sur la face frontale (32) duquel est appliquée une couche réfléchissante.

9. Cellule de mesure de liquides selon la revendication 8, ***caractérisée en ce que*** la couche réfléchissante est composée d'un revêtement d'or rugueux.

10. Cellule de mesure de liquides selon la revendication 8 ou 9, ***caractérisée en ce que*** le corps (30) de réflecteur est composé d'un matériau conduisant bien la chaleur, de préférence du cuivre, et peut être chauffé et/ou refroidi.

11. Cellule de mesure de liquides selon la revendication 10, ***caractérisée en ce qu***'un élément à effet Peltier (34) est prévu comme chauffage et/ou refroidissement.

12. Cellule de mesure de liquides selon la revendication 10 ou 11, ***caractérisée en ce que*** le réflecteur (30) s'appuie avec sa surface frontale (32) sur la partie (33) de fenêtre de la partie inférieure (7) de chambre avec une précontrainte élastique.

13. Cellule de mesure de liquides selon l'une quelconque des revendications 10 à 12, ***caractérisée en ce que*,** pour compenser la dilatation de longueur à différentes températures, il est prévu un élément intermédiaire (35) conducteur thermique relié au chauffage (35), qui présente sur sa face supérieure une rainure (38) de préférence annulaire, dans laquelle une partie inférieure (37) de préférence tubulaire du corps de réflecteur (30) est enfoncée de manière mobile.

14. Cellule de mesure de liquides selon la revendication 13, ***caractérisée en ce que*** la rainure (38) est munie d'un matériau conduisant bien la chaleur, durablement pâteux, de préférence d'une pâte conductrice thermique.

15. Cellule de mesure de liquides selon la revendication 13 ou 14, ***caractérisée en ce qu***'une plaque de compensation (39) ou une rondelle ressort est placée sur le fond de la rainure pour produire une précontrainte élastique entre le corps de réflecteur (30) et l'élément intermédiaire (35).

16. Cellule de mesure de liquides selon l'une quelconque des revendications précédentes, ***caractérisée en ce que*** la partie inférieure de chambre (7) présente dans la partie (33) de fenêtre un capteur de température (40) qui est placé de préférence excentré à proximité de l'entrée (20) de liquide.

17. Cellule de mesure de liquides selon la revendication 16, ***caractérisée en ce que*** la partie inférieure (7) de chambre présente dans la partie (33) de fenêtre un évidement (41) partant du perçage (29) de réflecteur, évidement dans lequel est logé le capteur de température (40), de sorte qu'il vient se placer près de la surface de la partie inférieure (7) de chambre limitant la chambre de mesure (16).
